(19) Europäisches Patentamt
European Patent Office
Office européen des brevets

(11) EP 1 717 975 B1

(12) **EUROPEAN PATENT SPECIFICATION**

(45) Date of publication and mention
of the grant of the patent:
**02.09.2015 Bulletin 2015/36**

(51) Int Cl.:
**H04H 40/18** (2008.01)

(21) Application number: **06008785.5**

(22) Date of filing: **27.04.2006**

(54) **Digital broadcasting receiving terminal with reception quality indicator**

Digitaler Rundfunkempfänger mit Empfangsqualitätanzeige

Récepteur de radiodiffusion numérique avec indicateur de qualité de réception

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **29.04.2005 KR 20050035941**

(43) Date of publication of application:
**02.11.2006 Bulletin 2006/44**

(73) Proprietor: **LG Electronics, Inc.
Seoul 150-721 (KR)**

(72) Inventor: **Cho, Nam Shin
Seoul (KR)**

(74) Representative: **Katérle, Axel
Wuesthoff & Wuesthoff
Patentanwälte PartG mbB
Schweigerstraße 2
81541 München (DE)**

(56) References cited:
**EP-A- 0 818 923      EP-A- 1 089 429
WO-A-2004/082198**

**Description**

**BACKGROUND OF THE INVENTION**

**Field of the Invention**

The present invention relates to a terminal having a digital broadcast receiver, and more particularly to detecting reception quality of a digital broadcast signal received by such a terminal.

**Discussion of the Related Art**

In a conventional mobile communication terminal, antenna bars are provided on a display to indicate the signal reception level of the terminal based upon the current location of the user. These antenna bars allow a user to recognize whether they can utilize the terminal, or to determine possible call quality, at their current location.

In a digital multimedia broadcast receiving terminal, it is also desirable to provide the user an indication of the reception quality of the received digital broadcast signal. However, there are no existing standards that can accurately provide such information. As such, these types of terminals provide reception quality using different criteria and parameters, which may vary among different manufactures.

WO 2004/082198 A1 discloses a testing apparatus comprising means for receiving signals in a frequency range comprising a plurality of channels. The testing apparatus further comprises means for scanning said frequency range, means for detecting at least one channel comprising a digital signal, means for measuring a bit error rate of the digital signal, means for performing at least one comparison between the bit error rate and at least one threshold, and means for determining a quality of said channel on the basis of said comparison.

From document EP 1 089 429 A2, an automatic gain control circuit and a receiver having the same is known. Provided is a reception quality detector for detecting the reception quality of a diffusion of a constellation, the error correction ratio or the error rate, so as to set up an optimal standard level by switching a reference level for switching an intermediate frequency automatic gain control operation and an radio frequency automatic gain operation according to the reception quality.

**SUMMARY OF THE INVENTION**

The present invention concerns a method for determining signal reception quality at a terminal according to claim 1 and a terminal for receiving digital broadcast signals according to claim 6.

Features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

**BRIEF DESCRIPTION OF THE DRAWINGS**

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments. In the drawings:

FIG. 1 is a schematic block diagram of a receiver module configured to receive satellite digital broadcast signals;
FIG. 2 is a schematic block diagram of a receiver module configured to receive terrestrial digital broadcast signals;
FIG. 3 is a schematic block diagram depicting a reception quality indicator according to an embodiment of the present invention;
FIG. 4 is a graph depicting the relative relationship between BERs, both before and after Viterbi decoding; and
FIG. 5 is a flowchart showing one technique for determining reception quality according to an embodiment of the present invention.

**DETAILED DESCRIPTION OF THE PREFERRED EMBODIMENTS**

Reference will now be made in detail to the preferred embodiments of the present invention, examples of which are illustrated in the accompanying drawings. Wherever possible, the same reference numbers will be used throughout the drawings to refer to the same or similar parts.

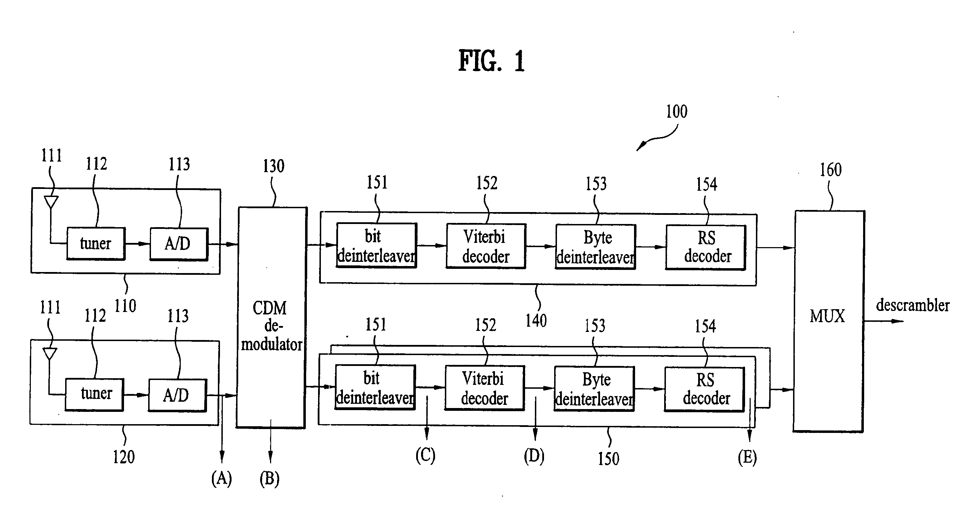

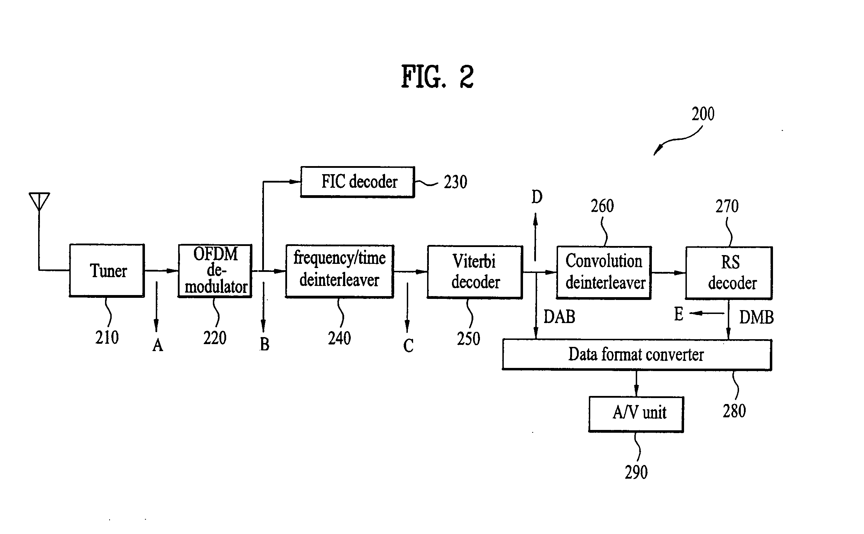

FIG. 1 is a schematic block diagram of receiver module 100 configured to receive satellite digital broadcast signals. In contrast, FIG. 2 is a schematic block diagram of receiving component 200 configured to receive terrestrial digital broadcast signals. These receiving modules form a receiving component of an otherwise conventional mobile terminal. By way of example only, reception quality at the receiving modules of FIGS. 1 and 2 can be measured using information obtained from five separate locations in each terminal.

Although embodiments will be described with reference to a Viterbi decoder utilized in a terminal having a digital broadcast receiver, it is to be appreciated that such description applies equally to other decoders which adopt forward error correction technology. For example, the turbo decoder utilized in the MediaFlo standard is one such decoder. Similarly, the teachings of the present disclosure may also be applied to terminals operating according to the European DVB-H standard. In addition, the digital broadcast receiver of various mobile terminals presented herein may be implemented using a satellite receiver, a terrestrial receiver, or a combination satellite/terrestrial receiver.

FIG. 1 is a block diagram of digital broadcast receiver 100 of a mobile terminal. This receiver is shown configured to receive satellite digital broadcast signals. In this figure, the digital broadcast receiver includes first receiving block 110, second receiving block 120, and code division multiplexing (CDM) demodulator 130 demodulating signals provided from first and second receiving blocks 110 and 120. The broadcast receiver further includes decoding unit 140 for detecting and correcting errors contained in signals received from first receiving block 110, and decoding unit 150 for detecting and correcting errors contained in signals received from second receiving block 120. MUX block 160 is shown multiplexing a signal provided from each of the decoding units 140 and 150, and responsively communicating a signal to a descrambler.

First and second receiving blocks 110 and 120 each include diversity antenna 111, tuner 112, and an analog/digital (A/D) converter 113. Decoding units 140 and 150 each include bit deinterleaver 151, Viterbi decoder 152, byte deinterleaver 153, and Reed-Solomon (RS) decoder 154. In this figure, receiving blocks 110 and 120, and decoding units 140 and 150, are similarly constructed, but differ from each other according to the control signals used to operate these components.

FIG. 2 is a block diagram of digital broadcast receiver 200 configured to receive terrestrial digital broadcast signals. In this figure, receiver 200 includes tuner 210 and orthogonal frequency-division multiplexing (OFDM) demodulator 220, which demodulates signals provided by the tuner. Demodulator 220 provides signaling to fast information channel (FIC) decoder 230 and frequency/time deinterleaver 240. Broadcast receiver 200 further includes Viterbi decoder 250, convolution deinterleaver 260, RS decoder 270, data format converter 280, and A/V unit 290.

The digital broadcast receivers of FIGS. 1 and 2 are shown with five separate reception level measuring points; namely, points A-E. The specifics of each of these points are as follows.

Point A: a point at which a radio frequency (RF) reception level is present. This level is represented by the sum of a desired signal, an undesired interference signal, and noise. At this point, an instantaneous reception level or a reception level for a short time period is usually measured.

Point B: a point at which a reception level associated with Signal-to-Noise Ratio (SNR) can be obtained. The level of an undesired interference signal and noise, relative to a desired signal, can be ascertained. In general, instantaneous reception quality or reception quality for a short time period is measured.

Point C: a point at which a bit error rate (BER) before the Viterbi decoder can be ascertained. The quality of a received bit before Viterbi decoding can also be obtained.

Point D: a point at which the BER after the Viterbi decoder can be obtained. The quality of a received bit after being passed through the Viterbi decoder, which is capable of recovering errors distributed intermittently and at random, can also be obtained.

Point E: a point at which a packet error rate (PER) after a Reed-Solomon decoder can be obtained. The Reed-Solomon decoder recovers data on a packet-by-packet basis, and indicates whether or not one or more errors are present in an individual packet.

In FIGS. 1 and 2, points A and B relate to the reception level of a received digital broadcast signal, and points C, D, and E relate to the reception quality. The relationship among the points C, D, and E may be defined as:

C (BER before Viterbi decoding) > D (BER after Viterbi decoding) > E (PER).

The BER and PER conditions in a typical mobile terminal having a digital broadcast receiver are as follows:

(1) BER after Viterbi decoding is $2*10E-4$;
(2) PER is 0.

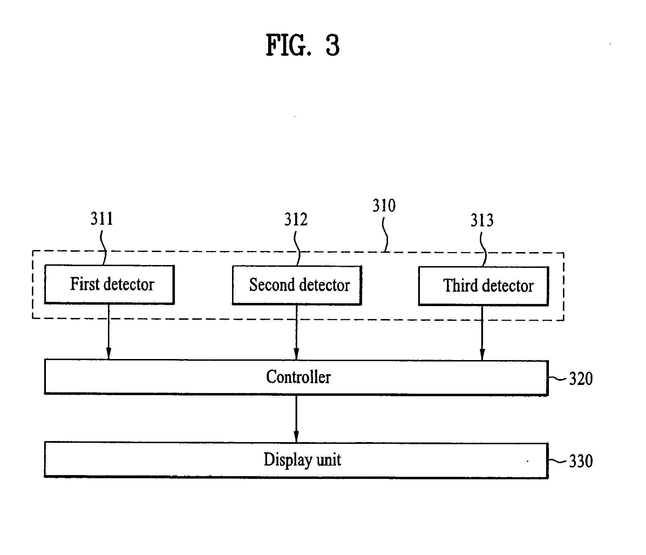

FIG. 3 is a schematic block diagram depicting a reception quality indicator according to an embodiment of the present invention. In this figure, the reception quality indicator includes error rate detection unit 310 for detecting packet error rate (PER), and bit error rates (BERs), both before and after a forward error correction (FEC) decoder.

Error rate detection unit 310 is shown having first, second, and third detectors 311, 312, and 313, respectively.

First detector 311 may be used for detecting the PER from an output signal from a Reed-Solomon decoder, second detector 312 may be used for detecting the BER before the FEC decoder, and third detector 313 may be used for detecting the BER after the FEC decoder.

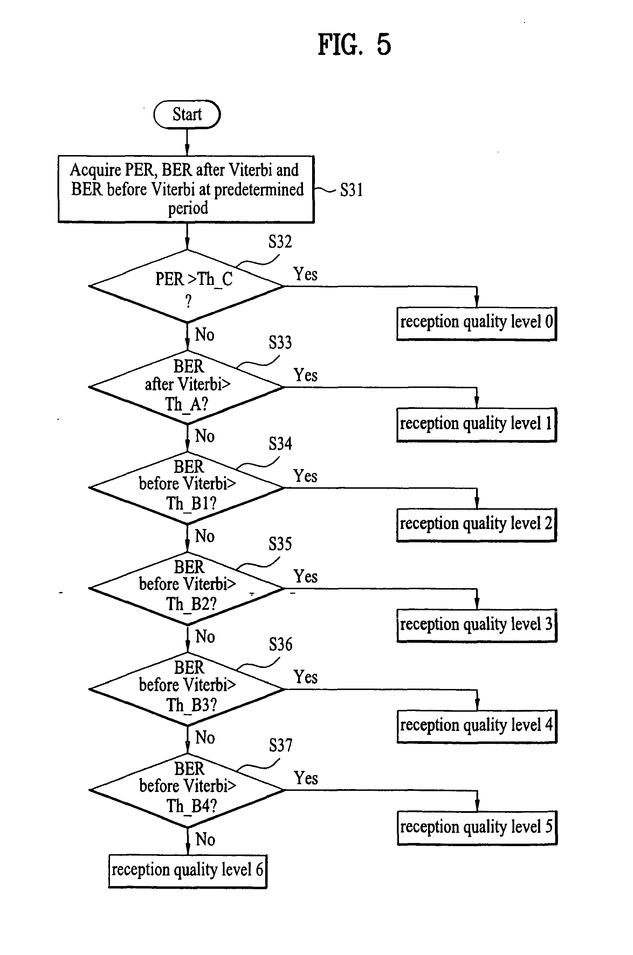

The reception quality indicator further includes controller 320. This controller may be configured to compare the PER and BERs, which are detected by error rate detection unit 310, with predetermined threshold values. Reception quality may then be determined according to these comparison results, the specifics of which will be discussed in more detail in conjunction with FIG. 5. Controller 320 outputs a control signal corresponding to reception quality, which is communicated to display unit 330.

Display unit 330 may be configured for displaying an indicator which relates to the user the reception quality of received signals. This indicator is typically generated responsive to a control signal received from controller 320. A user can thus ascertain the reception quality by observing the display unit of the mobile terminal.

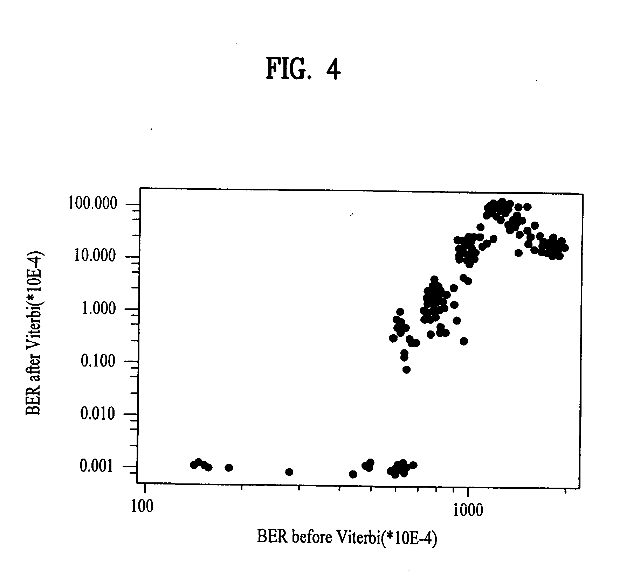

FIG. 4 is a graph depicting the relative relationship between BERs, both before and after Viterbi decoding. In this graph, there is a significant difference between BERs before and after Viterbi decoding. For instance, when BER before Viterbi decoding is 5*10E-2 or less, the BER after Viterbi decoding is close to zero. Viterbi error correction of the BERs causes the illustrated difference between the BERs.

The relationship between BERs after Viterbi decoding and BERs before Viterbi decoding can be expressed by the following:

$$\texttt{BER after Viterbi} \fallingdotseq \texttt{100 * BER before Viterbi.}$$

Thus, it may be more effective to determine reception quality using BER before Viterbi decoding, rather than after Viterbi decoding, since a higher resolution of data points are possible when using BER before Viterbi decoding.

It is to be understood that accurately determining reception quality using BER after Viterbi decoding is still possible. However, such measurements often require an increased number of actual tests. Increasing the number of tests requires an increased amount of time, which causes a corresponding decrease in overall efficiency. Therefore, in accordance with an embodiment of the present invention, information about reception quality of the terminal is obtained using the BER before Viterbi decoding in order to maximize efficiency of such measurements. However, it is to be understood that terminal reception quality may alternatively be provided based upon BER after Viterbi decoding, or based upon the packet error rate (PER).

FIG. 5 is a flowchart showing one technique for determining reception quality according to an embodiment of the present invention. In a nonlimiting example, seven distinct reception quality levels may be determined and subsequently displayed or otherwise presented to the user. Reception quality levels may be displayed on a display unit quantitatively in numeric values (e.g., 0-6), using a bar graph, or using any other technique which would convey information relating to the level of reception quality.

Block S31 provides for the acquiring of BERs, both before and after a Viterbi decoder, and a PER from an output signal from a Reed-Solomon decoder, for example. This data may be acquired during a defined time period such as 500 ms - 1 sec, for example.

It is generally understood that lower signal levels correspond to lower reception quality. Conversely, higher signals levels correspond to higher reception quality. Situations in which the PER is greater than a predetermined threshold value (Th_C) usually indicate that the received packet is in such a broken or distorted state that it is difficult to interpret. In such a scenario, as indicated in block S32, reception quality may be defined as the lowest level, causing the display of "0," for example.

In another operation, the BER after the Viterbi decoder is compared with a predetermined threshold value (Th_A) (operation S33). If the BER after the Viterbi decoder is greater than the threshold value (Th_A), then it is likely that reception quality is outside the generally desired levels. In such a scenario, the reception quality level is displayed as "1" to indicate that the reception quality is very low.

In accordance with blocks S34-S37, subsequent reception quality level evaluations may be performed using criteria based upon the BER before the Viterbi decoding. These quality levels evaluations are determined using increasing lower threshold levels, such that Th_B1 > Th_B2 > Th_B3 > Th_B4. Reception quality levels 2-6 may therefore be identified based upon the value of the BER before the Viterbi decoding, as provided for in blocks S34-S37.

Although FIG. 5 depicts seven separate reception quality levels, greater or fewer levels may alternatively be used. If desired, block S32 or block S33, or both, may be omitted while still providing sufficiently accurate reception quality determinations. In such an embodiment, PER and BER after Viterbi would not need to be acquired in block S31. In accordance with another embodiment, quality may be determined using only the necessary operations associated with blocks S31 and S32, thus eliminating the need for blocks S33-S37. Another alternative is to determine signal quality using only the necessary operations associated with blocks S31 and S33, thus eliminating the need for blocks S32, and

# EP 1 717 975 B1

S34-S37. In yet another embodiment, signal quality may be determined using the necessary operations of blocks S31-S33, thus eliminating the need for blocks S34-S37.

It is to be understood that embodiments of the present invention may be used to provide a reception sensitivity indicator for a terminal having, for example, a digital broadcast receiver. The indicators disclosed herein are capable of providing accurate reception quality information using, for example, a bit error rate before a forward error correction (FEC) decoder.

The foregoing embodiments and advantages are merely exemplary and are not to be construed as limiting the present invention. The present teaching can be readily applied to other types of apparatuses and processes. The description of the present invention is intended to be illustrative, and not to limit the scope of the claims. Many alternatives, modifications, and variations will be apparent to those skilled in the art.


**Claims**

1. A method for determining signal reception quality at a terminal, said method comprising:

   receiving a digital broadcast signal;
   detecting (S31) a first bit error rate, first BER, of said digital broadcast signal;
   detecting (S31) a second bit error rate, second BER, of said digital broadcast signal after said digital broadcast signal is decoded by a first decoder (152, 250);
   detecting (S31) packet error rate, PER, of said digital broadcast signal after said digital broadcast signal Z decoded by said first decoder is further decoded by a second decoder (154, 270); and
   determining (S32, 533, S34) reception quality of said digital broadcast signal based upon a value of said first BER, said second BER, and said PER,**characterized in that** said first bit error rate is detected before said digital broadcast signal is decoded by the first decoder (152, 250), and
   said determining reception quality comprises:

      comparing (S32) said packet error rate with a first threshold value (Th_C),

   wherein if said PER exceeds said first threshold value (Th_C), then said reception quality is defined as a first quality level, otherwise said determining reception quality further comprises:

      comparing (S33) said second bit error rate with a second threshold value (Th_A) after comparing said packet error rate with said first threshold value (Th_C), wherein if said second BER exceeds said second threshold value (Th_A), then said reception quality is defined as a second quality level, otherwise, said determining reception quality further comprises:

         comparing (S34) said first bit error rate with a third threshold value (Th_B1) after comparing said second bit error rate with said second threshold value (Th_A), wherein if said first BER exceeds said third threshold value (Th_B1), then said reception quality is defined as a third quality level.

2. The method according to claim 1, wherein said determining reception quality further comprises:

   if said first bit error rate does not exceed said third threshold value (Th_BI) repeatedly reducing a value of said third threshold value, and each time said value of said third threshold value is reduced, comparing said first bit error rate with said third threshold value,
   wherein if said first BER exceeds said third threshold value, then said reception quality is defined as a third quality level, wherein said third quality level represents said reduced value of said third threshold value.

3. The method according to claim 1, wherein said first bit error rate, said second bit error rate and said packet error rate are detected during a predetermined time period.

4. The method according to claim 3, wherein said predetermined time period ranges from about 500 ms to about 1 second.

5. The method according to claim 1, further comprising:

   displaying an indicator representing said reception quality.

5

**6.** A terminal (100, 200) for receiving digital broadcast signals, said terminal comprising:

a signal receiving component (110, 120, 210) for receiving a digital broadcast signal;
a first error rate detection unit (312) for detecting a first bit error rate, first BER, of said digital broadcast signal;
a second error rate detection unit (313) for detecting a second bit error rate, second BER, of said digital broadcast signal after said digital broadcast signal is decoded by a first decoder (152, 250);
a packet error rate detection unit (311) for detecting packet error rate, PER, of said digital broadcast signal after said digital broadcast signal decoded by said first decoder is further decoded by a second decoder (154, 270); and
a controller (320) for determining reception quality of said digital broadcast signal based upon a value of said first BER, said second BER and said PER,
**characterized in that** said first error rate detection unit is adapted to detect the first bit error rate of said broadcast signal before said digital broadcast signal is decoded by the first decoder (152, 250), wherein said controller is further configured to:

compare said packet error rate with a first threshold value (Th_C),
wherein if said PER exceeds said first threshold value (Th_C), then said reception quality is defined as a first quality level, otherwise, said controller is further configured to:

compare said second bit error rate with a second threshold value (Th_A) after said packet error rate is compared with said first threshold value (Th_C), wherein if said second BER exceeds said second threshold value (Th_A), then said reception quality is defined as a second quality level, otherwise, said controller is further configured to:
compare said first bit error rate with a third threshold value (Th_B1) after said second bit error rate is compared with said second threshold value (Th_A), wherein if said first BER exceeds said third threshold value (Th_B1), then said reception quality is defined as a third quality level.

**7.** The terminal according to claim 6, wherein said controller is further configured to:

if said first bit error rate does not exceed said third threshold value (Th_B1), repeatedly reduce a value of said third threshold value, and each time said value of said third threshold value is reduced,
compare said first bit error rate with said third threshold value,
wherein if said first BER exceeds said third threshold value, then said reception quality is defined as a third quality level, wherein said third quality level represents said reduced value of said third threshold value.

**8.** The terminal according to claim 6, wherein said terminal is configured to detect said first bit error rate, said second bit error rate, and said packet error rate during a predetermined time period.

**9.** The terminal according to claim 8, wherein said predetermined time period ranges from about 500 ms to about 1 second.

**10.** The terminal according to claim 6, wherein said first decoder (152, 250) comprises a forward error correction (FEC) decoder.

**11.** The terminal according to claim 10, wherein said forward error correction (FEC) decoder comprises a Viterbi decoder.

**12.** The terminal according to claim 10, wherein said forward error correction (FEC) decoder comprises a turbo decoder.

**13.** The terminal according to claim 6, further comprising:

a display for displaying an indicator representing said reception quality.

**Patentansprüche**

**1.** Verfahren zum Ermitteln einer Signalempfangsqualität an einem Endgerät, wobei das Verfahren umfasst:

Empfangen eines digitalen Rundfunksignals;
Erfassen (S31) einer ersten Bitfehlerrate, erste BER, des digitalen Rundfunksignals;

Erfassen (S31) einer zweiten Bitfehlerrate, zweite BER, des digitalen Rundfunksignals, nachdem das digitale Rundfunksignal von einem ersten Dekoder (152, 250) dekodiert wird;

Erfassen (S31) einer Paketfehlerrate, PER, des digitalen Rundfunksignals, nachdem das von dem ersten Dekoder dekodierte digitale Rundfunksignal außerdem von einem zweiten Dekoder (154, 270) dekodiert wird; und

Ermitteln (S32, 533, S34) einer Empfangsqualität des digitalen Rundfunksignals basierend auf einem Wert der ersten BER, der zweiten BER und der PER,

**dadurch gekennzeichnet, dass** die erste Bitfehlerrate erfasst wird, bevor das digitale Rundfunksignal von dem ersten Dekoder (152, 250) dekodiert wird, und

das Ermitteln der Empfangsqualität umfasst:

Vergleichen (S32) der Paketfehlerrate mit einem ersten Schwellwert (Th_C),

wobei, wenn die PER den ersten Schwellwert (Th_C) übertrifft, dann wird die Empfangsqualität definiert als ein erstes Qualitätsniveau, sonst umfasst das Ermitteln der Empfangsqualität außerdem:

Vergleichen (S33) der zweiten Bitfehlerrate mit einem zweiten Schwellwert (Th_A) nach dem Vergleichen der Paketfehlerrate mit dem ersten Schwellwert (Th_C),
wobei, wenn die zweite BER den zweiten Schwellwert (Th_A) übertrifft, dann wird die Empfangsqualität definiert als ein zweites Qualitätsniveau, sonst umfasst das Ermitteln der Empfangsqualität außerdem:

Vergleichen (S34) der ersten Bitfehlerrate mit einem dritten Schwellwert (Th_B1) nach dem Vergleichen der zweiten Bitfehlerrate mit dem zweiten Schwellwert (Th_A),
wobei, wenn die erste BER den dritten Schwellwert (Th_B1) übertrifft, dann wird die Empfangsqualität als ein drittes Qualitätsniveau definiert.

2.  Verfahren nach Anspruch 1, wobei das Ermitteln der Empfangsqualität ferner umfasst:

wenn die erste Bitfehlerrate den dritten Schwellwert (Th_BI) nicht übertrifft, wiederholtes Verringern eines Werts des dritten Schwellwerts, und jedes Mal, wenn der Wert des dritten Schwellwerts verringert wird, Vergleichen der ersten Bitfehlerrate mit dem dritten Schwellwert,
wobei, wenn die erste BER den dritten Schwellwert übertrifft, dann wird die Empfangsqualität als ein drittes Qualitätsniveau definiert, wobei das dritte Qualitätsniveau den verringerten Wert des dritten Schwellwerts darstellt.

3.  Verfahren nach Anspruch 1, wobei die erste Bitfehlerrate, die zweite Bitfehlerrate und die Paketfehlerrate erfasst werden während einer vorbestimmten Zeitdauer.

4.  Verfahren nach Anspruch 3, wobei die vorbestimmte Zeitdauer im Bereich von etwa 500 ms bis etwa 1 Sekunde liegt.

5.  Verfahren nach Anspruch 1, ferner umfassend:

Anzeigen eines Indikators, der die Empfangsqualität darstellt.

6.  Endgerät (100, 200) zum Empfangen von digitalen Rundfunksignalen, welches umfasst:

einen Signalempfangsteil (110, 120, 210) zum Empfangen eines digitalen Rundfunksignals;
eine Erfassungseinheit (312) für eine erste Fehlerrate zum Erfassen einer ersten Bitfehlerrate, erste BER, des digitalen Rundfunksignals;
eine Erfassungseinheit (313) für eine zweite Fehlerrate zum Erfassen einer zweiten Bitfehlerrate, zweite BER, des digitalen Rundfunksignals, nachdem das digitale Rundfunksignal von einem ersten Dekoder (152, 250) dekodiert wird;
eine Erfassungseinheit (311) für eine Paketfehlerrate zum Erfassen einer Paketfehlerrate, PER, des digitalen Rundfunksignals, nachdem das von dem ersten Dekoder dekodierte digitale Rundfunksignal außerdem von einem zweiten Dekoder (154, 270) dekodiert wird; und
eine Steuerung (320) zum Ermitteln einer Empfangsqualität des digitalen Rundfunksignals basierend auf einem Wert der ersten BER, der zweiten BER und der PER,
**dadurch gekennzeichnet, dass** die Erfassungseinheit für die erste Fehlerrate dazu eingerichtet ist, die erste Bitfehlerrate des Rundfunksignals zu erfassen, bevor das digitale Rundfunksignal von dem ersten Dekoder

# EP 1 717 975 B1

(152, 250) dekodiert wird, wobei die Steuerung ferner eingerichtet ist zum:

Vergleichen der Paketfehlerrate mit einem ersten Schwellwert (Th_C),

wobei, wenn die PER den ersten Schwellwert (Th_C) übertrifft, dann wird die Empfangsqualität als ein erstes Qualitätsniveau definiert, sonst ist die Steuerung ferner eingerichtet zum:

Vergleichen der zweiten Bitfehlerrate mit einem zweiten Schwellwert (Th_A), nachdem die Paketfehlerrate mit dem ersten Schwellwert (Th_C) verglichen wird, wobei, wenn die zweite BER den zweiten Schwellwert (Th_A) übertrifft, dann wird die Empfangsqualität als ein zweites Qualitätsniveau definiert, sonst ist die Steuerung ferner eingerichtet zum:
Vergleichen der ersten Bitfehlerrate mit einem dritten Schwellwert (Th_B1), nachdem die zweite Bitfehlerrate mit dem zweiten Schwellwert (Th_A) verglichen wird, wobei, wenn die erste BER den dritten Schwellwert (Th_B1) übertrifft, dann wird die Empfangsqualität definiert als ein drittes Qualitätsniveau.

7. Endgerät nach Anspruch 6, wobei das Endgerät ferner eingerichtet ist zum:

wenn die erste Bitfehlerrate den dritten Schwellwert (Th_B1) nicht übertrifft, wiederholten Verringern eines Werts des dritten Schwellwerts und jedes Mal, wenn der Wert des dritten Schwellwerts verringert wird, Vergleichen der ersten Bitfehlerrate mit dem dritten Schwellwert, wobei, wenn die erste BER den dritten Schwellwert übertrifft, dann wird die Empfangsqualität definiert als ein drittes Qualitätsniveau, wobei das dritte Qualitätsniveau den verringerten Wert des dritten Schwellwerts darstellt.

8. Endgerät nach Anspruch 6, wobei das Endgerät dazu eingerichtet ist, die erste Bitfehlerrate, die zweite Bitfehlerrate und die Paketfehlerrate während einer vorbestimmten Zeitdauer zu erfassen.

9. Endgerät nach Anspruch 8, wobei die vorbestimmte Zeitdauer im Bereich von etwa 500 ms bis etwa 1 Sekunde liegt.

10. Endgerät nach Anspruch 6, wobei der erste Dekoder (152, 250) einen Dekoder zur vorwärts gerichteten Fehlerkorrektur (FEC) umfasst.

11. Endgerät nach Anspruch 10, wobei der Dekoder zur vorwärts gerichteten Fehlerkorrektur (FEC) einen Viterbi-Dekoder umfasst.

12. Endgerät nach Anspruch 10, wobei der Dekoder zur vorwärts gerichteten Fehlerkorrektur (FEC) einen Turbo-Dekoder umfasst.

13. Endgerät nach Anspruch 6, ferner umfassend:

eine Anzeige zum Anzeigen eines Indikators, der die Empfangsqualität darstellt.


## Revendications

1. Procédé destiné à déterminer la qualité de réception d'un signal au niveau d'un terminal, ledit procédé comprenant les étapes consistant à :

recevoir un signal de radiodiffusion numérique ;
détecter (S31) un premier taux d'erreur binaire, premier BER, dudit signal de radiodiffusion numérique ;
détecter (S31) un deuxième taux d'erreur binaire, deuxième BER, dudit signal de radiodiffusion numérique après que ledit signal de radiodiffusion numérique a été décodé par un premier décodeur (152, 250) ;
détecter (S31) un taux d'erreur de paquet, PER, dudit signal de radiodiffusion numérique après que ledit signal de radiodiffusion numérique décodé par le premier décodeur a été en outre décodé par un deuxième décodeur (154, 270) ; et
déterminer (S32, S33, S34) la qualité de réception dudit signal de radiodiffusion numérique sur la base d'une valeur dudit premier BER, dudit deuxième BER, et dudit PER, **caractérisé en ce que**
ledit taux d'erreur binaire est détecté avant que ledit signal de radiodiffusion numérique soit décodé par le premier décodeur (152, 250), et

ladite détermination de qualité de réception comprend l'étape consistant à :

comparer (S32) ledit taux d'erreur de paquet avec une première valeur de seuil (Th_C),

dans lequel si ledit PER dépasse ladite première valeur de seuil (Th_C), alors ladite qualité de réception est définie comme un premier niveau de qualité, sinon ladite détermination de qualité de réception comprend en outre l'étape consistant à :

comparer (S33) ledit deuxième taux d'erreur binaire avec une deuxième valeur de seuil (Th_A) après avoir comparé ledit taux d'erreur de paquet avec ladite première valeur de seuil (Th_C), dans lequel si ledit deuxième BER dépasse ladite deuxième valeur de seuil (Th_A), alors ladite qualité de réception est définie comme un deuxième niveau de qualité, sinon, ladite détermination de qualité de réception comprend en outre l'étape consistant à :

comparer (S34) ledit premier taux d'erreur binaire avec une troisième valeur de seuil (Th_B1) après avoir comparé ledit deuxième taux d'erreur binaire avec ladite deuxième valeur de seuil (Th_A), dans lequel si ledit premier BER dépasse ladite troisième valeur de seuil (Th_B1), alors ladite qualité de réception est définie comme un troisième niveau de qualité.

2. Procédé selon la revendication 1, dans lequel ladite détermination de qualité de réception comprend en outre les étapes consistant à :

si ledit premier taux d'erreur binaire ne dépasse pas ladite troisième valeur de seuil (Th_B1)
réduire de manière répétée une valeur de ladite troisième valeur de seuil, et chaque fois que ladite valeur de ladite troisième valeur de seuil est réduite, comparer ledit premier taux d'erreur binaire avec ladite troisième valeur de seuil,
dans lequel si ledit premier BER dépasse ladite troisième valeur de seuil, alors ladite qualité de réception est définie comme un troisième niveau de qualité, dans lequel ledit troisième niveau de qualité représente ladite valeur réduite de ladite troisième valeur de seuil.

3. Procédé selon la revendication 1, dans lequel ledit premier taux d'erreur binaire, ledit deuxième taux d'erreur binaire et ledit taux d'erreur de paquet sont détectés pendant une période de temps prédéterminée.

4. Procédé selon la revendication 3, dans lequel ladite période de temps prédéterminée s'étale d'environ 500 ms à environ 1 seconde.

5. Procédé selon la revendication 1, comprenant en outre l'étape consistant à :

afficher un indicateur représentant ladite qualité de réception.

6. Terminal (100, 200) destiné à recevoir des signaux de radiodiffusion numérique, ledit terminal comprenant :

un composant de réception de signal (110, 120, 210) destiné à recevoir un signal de radiodiffusion numérique ;
une unité de détection de premier taux d'erreur (312) destinée à détecter un premier taux d'erreur binaire, premier BER, dudit signal de radiodiffusion numérique ;
une unité de détection de deuxième taux d'erreur (313) destinée à détecter un deuxième taux d'erreur binaire, deuxième BER, dudit signal de radiodiffusion numérique après que ledit signal de radiodiffusion numérique a été décodé par un premier décodeur (152, 250) ;
une unité de détection de taux d'erreur de paquet (311) destinée à détecter un taux d'erreur de paquet, PER, dudit signal de radiodiffusion numérique après que ledit signal de radiodiffusion numérique décodé par ledit premier décodeur a été en outre décodé par un deuxième décodeur (154, 270) ; et
un contrôleur (320) destiné à déterminer la qualité de réception dudit signal de radiodiffusion numérique sur la base d'une valeur dudit premier BER, dudit deuxième BER et dudit PER,
**caractérisé en ce que** ladite unité de détection de premier taux d'erreur est adaptée pour détecter le premier taux d'erreur binaire dudit signal de radiodiffusion avant que ledit signal de radiodiffusion numérique ait été décodé par le premier décodeur (152, 250), dans lequel ledit contrôleur est en outre configuré pour :

comparer ledit taux d'erreur de paquet avec une première valeur de seuil (Th_C),

dans lequel, si ledit PER dépasse ladite première valeur de seuil (Th_C), alors ladite qualité de réception est définie comme un premier niveau de qualité, sinon, ledit contrôleur est en outre configuré pour :

comparer ledit deuxième taux d'erreur binaire avec une deuxième valeur de seuil (Th_A) après que ledit taux d'erreur de paquet a été comparé avec une première valeur de seuil (Th_C), dans lequel si ledit deuxième BER dépasse ladite deuxième valeur de seuil (Th_A), alors ladite qualité de réception est définie comme un deuxième niveau de qualité, sinon, ledit contrôleur est en outre configuré pour :

comparer ledit premier taux d'erreur binaire avec une troisième valeur de seuil (Th_B1) après que ledit deuxième taux d'erreur binaire a été comparé avec ladite deuxième valeur de seuil (Th_A), dans lequel si ledit premier BER dépasse ladite troisième valeur de seuil (Th_B1), alors ladite qualité de réception est définie comme un troisième niveau de qualité.

7. Terminal selon la revendication 6, dans lequel ledit contrôleur est en outre configuré pour :

si ledit premier taux d'erreur binaire ne dépasse pas ladite troisième valeur de seuil (Th_B1), réduire de manière répétée une valeur de ladite troisième valeur de seuil, et chaque fois ladite valeur de ladite troisième valeur de seuil est réduite,
comparer ledit premier taux d'erreur binaire avec ladite troisième valeur de seuil,
dans lequel si ledit premier BER dépasse ladite troisième valeur de seuil, alors ladite qualité de réception est définie comme un troisième niveau de qualité, dans lequel ledit troisième niveau de qualité représente ladite valeur réduite de ladite troisième valeur de seuil.

8. Terminal selon la revendication 6, dans lequel ledit terminal est configuré pour détecter ledit premier taux d'erreur binaire, ledit deuxième taux d'erreur binaire, et ledit taux d'erreur de paquet pendant une période de temps prédéterminée.

9. Terminal selon la revendication 8, dans lequel ladite période de temps prédéterminée s'étale d'environ 500 ms à environ 1 seconde.

10. Terminal selon la revendication 6, dans lequel ledit premier décodeur (152, 250) comprend un décodeur de correction d'erreurs sans voie de retour (FEC).

11. Terminal selon la revendication 10, dans lequel ledit décodeur de correction d'erreurs sans voie de retour (FEC) comprend un décodeur de Viterbi.

12. Terminal selon la revendication 10, dans lequel ledit décodeur de correction d'erreurs sans voie de retour (FEC) comprend un turbo-décodeur.

13. Terminal selon la revendication 6, comprenant en outre :

un affichage destiné à afficher un indicateur représentant ladite qualité de réception.

# FIG. 1

100

EP 1 717 975 B1

# FIG. 2

EP 1 717 975 B1

200

FIC decoder — 230

D          260          270

Tuner → OFDM de-modulator → frequency/time deinterleaver → Viterbi decoder → Convolution deinterleaver → RS decoder

210      A      220      B      240      C      250      DAB          E ← DMB

Data format converter

A/V unit          280

290

# FIG. 3

# FIG. 4

# FIG. 5

Start

Acquire PER, BER after Viterbi and BER before Viterbi at predetermined period ~ S31

PER >Th_C ? — S32 — Yes → reception quality level 0

No

BER after Viterbi> Th_A? — S33 — Yes → reception quality level 1

No

BER before Viterbi> Th_B1? — S34 — Yes → reception quality level 2

No

BER before Viterbi> Th_B2? — S35 — Yes → reception quality level 3

No

BER before Viterbi> Th_B3? — S36 — Yes → reception quality level 4

No

BER before Viterbi> Th_B4? — S37 — Yes → reception quality level 5

No

reception quality level 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004082198 A1
- EP 1089429 A2